# EUROPEAN PATENT SPECIFICATION

(11) **EP 3 731 135 B1**
(45) Date of publication and mention of the grant of the patent: **31.05.2023**
(21) Application number: 19861270.7
(22) Date of filing: 20.02.2019
(51) Int. Cl.: G06V 10/141, G06V 40/13

(54) **METHOD AND DEVICE FOR FINGERPRINT RECOGNITION, AND TERMINAL DEVICE**
VERFAHREN UND VORRICHTUNG ZUR FINGERABDRUCKERKENNUNG UND ENDGERÄTEVORRICHTUNG
PROCÉDÉ ET DISPOSITIF DE RECONNAISSANCE D'EMPREINTE DIGITALE ET DISPOSITIF TERMINAL

(43) Date of publication of application: 28.10.2020
(73) Proprietor: SHENZHEN GOODIX TECHNOLOGY CO., LTD., Shenzhen, Guangdong 518045 (CN)
(72) Inventor: WANG, Qiji, Shenzhen, Guangdong 518045 (CN)
(74) Representative: Herrero & Asociados, S.L.
(86) International application number: PCT/CN2019/075600
(87) International publication number: WO 2020/168495

(56) References cited:
- EP-A1- 3 686 720
- CN-A- 107 194 331
- CN-A- 107 194 331
- CN-A- 108 235 750
- CN-A- 108 256 416
- CN-A- 108 287 634
- CN-A- 109 313 522
- US-A1- 2018 365 466

## Description

### TECHNICAL FIELD

The present application relates to the field of fingerprint identification, and more particularly, to a method and apparatus for fingerprint identification and a terminal device.

### BACKGROUND

An optical under-screen fingerprint identification technology refers that an optical fingerprint sensor captures reflected light formed by reflection of a finger from light emitted by a light source, where the reflected light carries fingerprint information of the finger, so as to implement under-screen fingerprint identification. In order to capture high-quality fingerprint data, a light signal reflected by the finger may be enhanced by utilizing screen light, thereby improving a success rate of fingerprint identification.

In order to improve user experience, a size of an optical fingerprint identification apparatus is gradually increasing, and therefore, larger-area screen light is required as a light source for fingerprint identification, which causes an increase in screen power consumption and affects beauty of a device.

US2018/365466A1 disclosed a mobile terminal including a display unit configured to display an image and including an OLED pixel module emitting light and a light non-transmitting layer formed therebelow, a fingerprint recognition sensor configured to recognize a user fingerprint by receiving, when the light emitted from the OLED pixel module is reflected by a user finger, the reflected light, a sensor insertion space formed by perforating a part of the light non-transmitting layer, the fingerprint recognition sensor being inserted into the sensor insertion space, and a force sensor disposed to surround a side surface of the fingerprint recognition sensor and to provide haptic feedback when pressure is applied to the force sensor.

CN109313522A provided a multi-sensor-based under-screen fingerprint capturing method and system and an electronic device, applied to an under-screen fingerprint capturing system including multiple fingerprint sensors, where the method includes: determining an effectively pressed fingerprint sensor among the multiple fingerprint sensors according to a pressing region of a user on a display screen, where each fingerprint sensor corresponding to a sensing region, and sensing regions corresponding to the multiple fingerprint sensors form a fingerprint capturing region of the under-screen fingerprint capturing system; controlling the effectively pressed fingerprint sensor to be in a working state and another fingerprint sensor other than the effectively pressed fingerprint sensor to be in a non-working state; and capturing fingerprint information of the user via the effectively pressed fingerprint sensor.

EP3686720A1 is prior art under Art 54(3) EPC and provided a method for identifying a fingerprint being applied to a terminal. The method may include: obtaining contact region parameters related to a contact region on the terminal; determining a contact pattern according to the contact region parameters; collecting and/or identifying fingerprint information within the contact pattern.

### SUMMARY

Embodiments of the present application provide a method and apparatus for fingerprint identification and a terminal device, which could reduce power consumption generated in a fingerprint identification process.

The invention is set out in the appended set of claims.

### BRIEF DESCRIPTION OF THE DRAWINGS

FIG. 1 is a schematic structural diagram of an electronic device to which the present application is applicable.
FIG. 2 is a schematic structural diagram of an electronic device to which the present application is applicable.
FIG. 3 is a schematic flowchart of a method for fingerprint identification according to an embodiment of the present application.
FIGS. 4(a) and 4(b) are schematic diagrams of display screens according to embodiments of the present application.
FIGS. 5(a) and 5(b) are schematic diagrams of pressing regions according to embodiments of the present application.
FIG. 6 is a schematic diagram of determining an illuminating region according to an embodiment of the present application.
FIG. 7 is a schematic diagram of determining an illuminating region according to an embodiment of the present application.
FIG. 8 is a schematic diagram of determining an illuminating region according to an embodiment of the present application. FIG. 9 is a schematic block diagram of an apparatus for fingerprint identification according to an embodiment of the present application.
FIG. 9 is a schematic flowchart of a method for fingerprint identification according to an embodiment of the present application.
FIG. 10 is a schematic diagram of a fingerprint processing region according to an embodiment of the present application.
FIG. 11 is a schematic diagram of a fingerprint processing region according to an embodiment of the present application.
FIG. 12 is a schematic diagram of a fingerprint processing region according to an embodiment of the present application.
FIG. 13 is a schematic block diagram of an apparatus for fingerprint identification according to an embodiment of the present application.
FIG. 14 is a schematic block diagram of an apparatus for fingerprint identification according to an embodiment of the present application.

### DESCRIPTION OF EMBODIMENTSHUS

Technical solutions in embodiments of the present application will be described hereinafter with reference to the accompanying drawings.

It should be understood that embodiments of the present application may be applied to an optical fingerprint system, including but not limited to an optical fingerprint identification system and a medical diagnostic product based on optical fingerprint imaging. The embodiments of the present application are only described by taking an optical fingerprint system as an example, which should not constitute any limitation to the embodiments of the present application, and the embodiments of the present application are also applicable to other systems using an optical imaging technology or the like.

As a common application scenario, the optical fingerprint system provided in the embodiments of the present application may be applied to a smart phone, a tablet computer, and other mobile terminals having a display screen or other terminal devices. More specifically, in the foregoing terminal device, a fingerprint identification apparatus may be specifically an optical fingerprint apparatus, which may be disposed in a partial region or an entire region under a display screen, thereby forming an underdisplay or under-screen optical fingerprint system. Alternatively, the fingerprint identification apparatus may also be partially or entirely integrated into the interior of the display screen of the terminal device to form an in-display or in-screen optical fingerprint system.

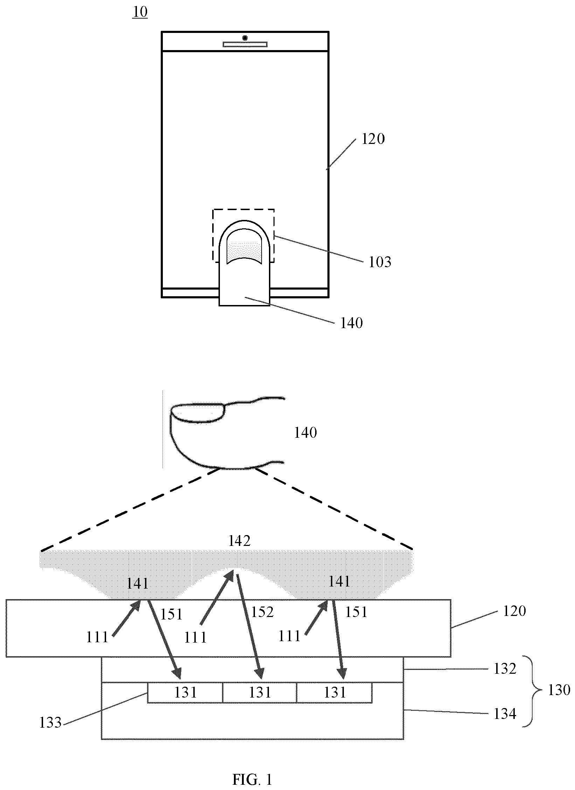

FIG. 1 illustrates a schematic structural diagram of a terminal device applicable to an embodiment of the present application. A terminal device 10 includes a display screen 120 and an optical fingerprint apparatus 130, where the optical fingerprint apparatus 130 is disposed in a partial region under the display screen 120. The optical fingerprint apparatus 130 includes an optical fingerprint sensor including a sensing array 133 having a plurality of optical sensing units 131. A region where the sensing array is located or a sensing region of the sensing array is a fingerprint capturing region 103 of the optical fingerprint apparatus 130. As shown in FIG. 1, the fingerprint capturing region 103 is located in a display region of the display screen 120. In an alternative embodiment, the optical fingerprint apparatus 130 may also be disposed at other positions, such as a side of the display screen 120 or a non-light transmitting region of an edge of the terminal device 10, and a light signal of at least part of the display region of the display screen 120 is directed to the optical fingerprint apparatus 130 through light path design, such that the fingerprint capturing region 103 is actually located in the display region of the display screen 120.

It should be understood that an area of the fingerprint capturing region 103 may be different from an area of the sensing array of the optical fingerprint apparatus 130. For example, the area of the fingerprint capturing region 103 of the optical fingerprint apparatus 130 may be larger than the area of the sensing array of the optical fingerprint apparatus 130 through light path design such as lens imaging light path design, reflective folding light path design or other light path design such as light convergence or reflection. In other alternative implementation manners, if the light path is directed in a manner of, for example, light collimation, the area of the fingerprint capturing region 103 of the optical fingerprint apparatus 130 may also be designed to be substantially identical with the area of the sensing array of the optical fingerprint apparatus 130.

Therefore, when a user needs to unlock the terminal device or perform other fingerprint verification, fingerprint input may be achieved merely by pressing a finger on the fingerprint capturing region 103 located on the display screen 120. Since fingerprint detection may be implemented in the screen, there is no need to exclusively reserve space for a front surface of the terminal device 10 adopting the foregoing structure to set a fingerprint button (such as a Home button), so that a full screen solution may be adopted; that is, the display region of the display screen 120 may be substantially extended to an entire front surface of the terminal device 10.

As an optional implementation manner, as shown in FIG. 1, the optical fingerprint apparatus 130 includes a light detecting portion 134 and an optical component 132. The light detecting portion 134 includes the sensing array, and a readout circuit and other auxiliary circuits electrically connected to the sensing array, and may be fabricated on a die by a semiconductor process, such as on an optical imaging chip or an optical fingerprint sensor. The sensing array specifically is a photodetector array including a plurality of photodetectors distributed in an array, and the photodetectors may serve as the optical sensing units as described above. The optical component 132 may be disposed above the sensing array of the light detecting portion 134, and may specifically include a filter layer, a light directing layer or light path directing structure, and other optical elements, the filter layer may be used to filter out ambient light penetrating a finger, and the light directing layer or light path directing structure is mainly used to direct reflected light reflected from a finger surface to the sensing array for optical detection.

In a specific implementation, the optical component 132 and the light detecting portion 134 may be encapsulated in the same optical fingerprint component. For example, the optical component 132 and the light detecting portion 134 may be encapsulated in the same optical fingerprint chip, or the optical component 132 may be disposed outside a chip where the light detecting portion 134 is located, for example, the optical component 132 is attached above the chip, or part of elements of the optical component 132 are integrated into the chip.

There are various implementations for the light directing layer or light path directing structure of the optical component 132, for example, the light directing layer may be specifically a collimator layer fabricated on a semiconductor silicon wafer, which has a plurality of collimating units or micro-pore arrays, and the collimating unit may be specifically a hole. Light in the reflected light reflected from the finger that is vertically incident to the collimating unit may pass through the collimating unit and be received by the optical sensing unit below it, however, light with an excessive large incident angle is attenuated through multiple reflection inside the collimating unit, and therefore, each optical sensing unit may substantially only receive the reflected light reflected from a fingerprint pattern right above the optical sensing unit, and thus the sensing array may detect a fingerprint image of the finger.

In another implementation manner, the light directing layer or the light path directing structure may also be an optical lens layer having one or more lens units, for example, a lens group composed of one or more aspheric lenses, for converging reflected light reflected from the finger to the sensing array of the light detecting portion 134 below it, so that the sensing array may perform imaging based on the reflected light so as to obtain the fingerprint image of the finger. Optionally, an optical lens layer may be provided with a pinhole in the light path of the lens unit, and the pinhole may cooperate with the optical lens layer to expand the field of view of the optical fingerprint apparatus, to improve a fingerprint imaging effect of the optical fingerprint apparatus 130.

In other implementation manners, the light directing layer or the light path directing structure may also specifically adopt a micro-lens layer having a micro-lens array formed by a plurality of micro-lenses, which may be formed above the sensing array of the light detecting portion 134 by a semiconductor growth process or other processes, and each micro-lens may correspond to one of the sensing units of the sensing array respectively. Moreover, other optical film layers such as a medium layer or a passivation layer, may be formed between the micro-lens layer and the sensing unit. More specifically, a light shielding layer (or referred to as a light blocking layer) having micro-pores may further be formed between the micro-lens layer and the sensing unit, where the micro-pores are formed between corresponding micro-lens and sensing units, and the light shielding layer may shield optical interference between adjacent micro-lenses and the sensing units, such that light corresponding to the sensing unit is converged to the interior of the micro-pore through the micro-lens and is transmitted to the sensing unit via the micro-pore to perform optical fingerprint imaging.

It should be understood that several implementations of the foregoing light directing layer or the light path directing structure may be used alone or in combination. For example, a micro-lens layer may be further disposed above or below a collimator layer or an optical lens layer. Certainly, when the collimator layer or the optical lens layer is used in combination with the micro-lens layer, the specific laminated structure or light path may require to be adjusted according to actual needs.

As an optional implementation manner, the display screen 120 may adopt a display screen with a self-emitting display unit, for example, an organic light-emitting diode (OLED) display screen or a micro light-emitting diode (Micro-LED) display screen. Taking an OLED display screen as an example, the optical fingerprint apparatus 130 may use a display unit (that is, an OLED light source) of the OLED display screen 120 located in the fingerprint capturing region 103 as an excitation light source for optical fingerprint detection. When a finger 140 is pressed against the fingerprint capturing region 103, the display screen 120 emits a beam of light 111 to a target finger 140 above the fingerprint capturing region 103, and the light 111 is reflected by a surface of the finger 140 to form reflected light or form scattered light after scattering inside the finger 140. In related patent applications, the reflected light and the scattered light are collectively referred to as reflected light for convenience of description. Since a ridge 141 and a valley 142 of a fingerprint have different light reflecting abilities, reflected light 151 from the ridge of the fingerprint and reflected light 152 from the valley of the fingerprint have different light intensities; after passing through the optical component 132, the reflected light is received by the sensing array 134 in the optical fingerprint apparatus 130 and converted into a corresponding electrical signal, that is, a fingerprint detecting signal; and fingerprint image data may be obtained based on the fingerprint detecting signal, and fingerprint matching verification may be further performed, thereby implementing an optical fingerprint identification function at the terminal device 10.

In other implementation manners, the optical fingerprint apparatus 130 may also use a built-in light source or an external light source to provide a light signal for fingerprint detection. In this case, the optical fingerprint apparatus 130 may be applied to a non-self-emitting display screen, such as a liquid crystal display screen or other passive light-emitting display screens. Taking a liquid crystal display screen having a backlight module and a liquid crystal panel as an example, in order to support under-display fingerprint detection of the liquid crystal display screen, the optical fingerprint system of the terminal device 10 may further include an excitation light source for optical fingerprint detection. The excitation light source may specifically be an infrared light source or a light source of non-visible light with a specific wavelength, which may be disposed under the backlight module of the liquid crystal display screen or disposed in an edge region under a protective cover of the terminal device 10. The optical fingerprint apparatus 130 may be disposed under the liquid crystal panel or the edge region of the protective cover, and light for fingerprint detection may reach the optical fingerprint apparatus 130 by being directed by a light path. Alternatively, the optical fingerprint apparatus 130 may also be disposed under the backlight module, and the backlight module allows the light for fingerprint detection to pass through the liquid crystal panel and the backlight module and reach the optical fingerprint apparatus 130 by providing a hole on film layers such as a diffusion sheet, a brightening sheet, a reflection sheet or the like, or by performing other optical designs. When the optical fingerprint apparatus 130 uses a built-in light source or an external light source to provide a light signal for fingerprint detection, a detection principle is consistent with the foregoing description.

It should be understood that, in a specific implementation, the terminal device 10 further includes a transparent protective cover 110; the cover may be a glass cover or a sapphire cover, which is located above the display screen 120 and covers a front surface of the terminal device 10. Therefore, in an embodiment of the present application, the so-called the finger being pressed against the display screen 120 actually refers to the finger being pressed against the cover 110 above the display screen 120 or a surface of the protective layer covering the cover 110.

In some implementation manners, the optical fingerprint apparatus 130 may only include one optical fingerprint sensor, and in this case, the fingerprint capturing region 103 of the optical fingerprint apparatus 130 has a smaller area and a fixed position, and therefore, the user needs to press the finger at a specific position of the fingerprint capturing region 103 when a fingerprint input is performed, otherwise the optical fingerprint apparatus 130 may not be able to capture the fingerprint image, thereby resulting in a poor user experience.

In some embodiments, the optical fingerprint apparatus 130 may specifically include a plurality of optical fingerprint sensors. The plurality of optical fingerprint sensors may be disposed under the display screen 120 side by side in a splicing manner, and sensing regions of the plurality of optical fingerprint sensors collectively constitute the fingerprint capturing region 103 of the optical fingerprint apparatus 130. In other words, the fingerprint capturing region 103 of the optical fingerprint apparatus 130 may include a plurality of sub-regions, each sub-region corresponding to a sensing region of one of the optical fingerprint sensors, so that a fingerprint capturing region 103 of the optical fingerprint module 130 may be extended to a main region of a lower half portion of the display screen, that is, to a customary pressing region of the finger, thereby implementing a blind pressing type of a fingerprint input operation. Alternatively, when the number of the optical fingerprint sensors is sufficient, the fingerprint capturing region 130 may also be extended to half of the display region or even the entire display region, thereby implementing half screen or full screen fingerprint detection.

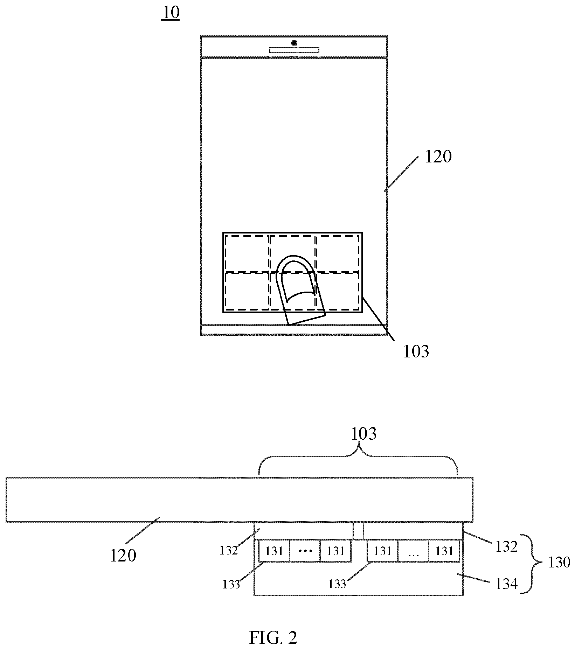

FIG. 2 is a schematic diagram illustrating that an optical fingerprint apparatus 130 includes a plurality of optical fingerprint sensors. The plurality of optical fingerprint sensors may be disposed under a display screen 120 side by side in a splicing manner or the like for example, and sensing regions of the plurality of optical fingerprint sensors collectively constitute a fingerprint capturing region 103 of the optical fingerprint apparatus 130. In other words, the fingerprint capturing region 103 of the optical fingerprint apparatus 130 may include a plurality of sub- regions, each sub-region respectively corresponds to one of the optical fingerprint sensors, or corresponds to the sensing region of one of optical sensing arrays 133.

Optionally, corresponding to the plurality of optical fingerprint sensors of the optical fingerprint apparatus 130, an optical component 132 may have a plurality of light path directing structures, and each light path directing structure respectively corresponds to one optical fingerprint sensor and is respectively attached to and disposed above the corresponding optical fingerprint sensor. Alternatively, the plurality of optical fingerprint sensors may also share an entire light path directing structure, that is, the light path directing structure has an area large enough to cover the sensing array of the plurality of optical fingerprint sensors. In addition, the optical component 132 may also include other optical elements, for example, a filter (Filter) layer or other optical films, which may be located between the light path directing structure and the optical fingerprint sensor or between the display screen 120 and the light path directing structure, and are mainly used to isolate the impact of external interference light on optical fingerprint detection. A filter may be used to filter out ambient light that penetrates a finger and enters into the optical fingerprint sensor via the display screen 120. Similar to the light path directing structure, the filter may be respectively configured for each of the optical fingerprint sensors to filter out interfering light, or a large-area filter may be adopted to cover the plurality of optical fingerprint sensors simultaneously.

The light path modulator may also be replaced by an optical lens, and a pinhole may be formed by a light shielding material above the optical lens to cooperate with the optical lens to converge fingerprint detection light to the optical fingerprint sensor under the optical lens, thereby achieving fingerprint imaging. Similarly, each of the optical fingerprint sensors may be respectively configured with an optical lens for fingerprint imaging, or the plurality of optical fingerprint sensors may also utilize the same optical lens to achieve light convergence and fingerprint imaging. In other alternative embodiments, each of the optical fingerprint sensors may even further have dual sensing arrays (Dual-Array) or multiple sensing arrays (Multi-Array), and two or more optical lenses are configured to cooperate with the dual or multiple sensing arrays for optical imaging so as to reduce an imaging distance and enhance an imaging effect.

When the plurality of optical fingerprint sensors such as those shown in FIG. 2 are used for fingerprint identification, since the fingerprint capturing region of the optical fingerprint apparatus increases, when screen light is used as a light source (or an excitation light source) for fingerprint identification, a screen emits light to an entire fingerprint capturing region for fingerprint identification, which causes an increase in screen power consumption and affects beauty of a device.

Embodiments of the present application provide a method and apparatus for fingerprint identification, which could reduce power consumption generated in a fingerprint identification process.

Hereinafter, the optical fingerprint apparatus is also referred to as an optical fingerprint identification apparatus, a fingerprint identification apparatus, or the like; the optical fingerprint sensor is also referred to as a fingerprint sensor, an optical fingerprint sensor chip, a fingerprint sensor chip, or the like; and the fingerprint capturing region may also be referred to as a fingerprint detecting region, a fingerprint identification region, or the like.

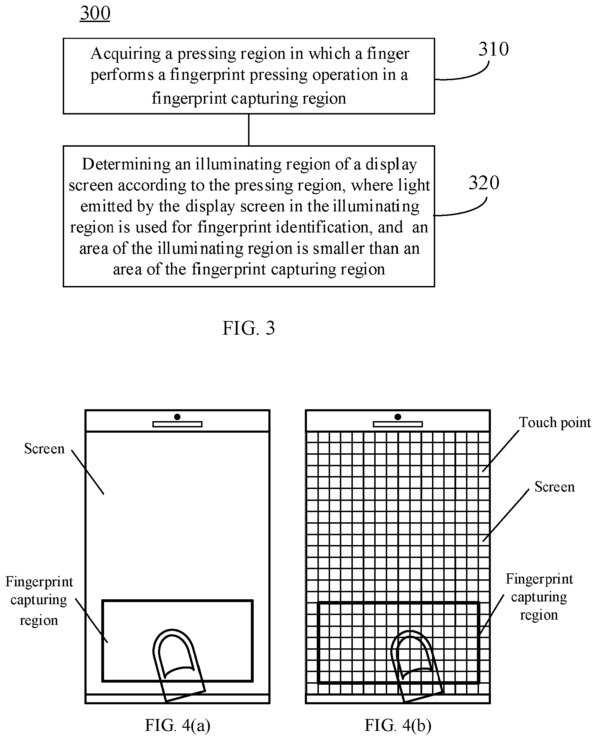

FIG. 3 is a schematic flowchart of a method 300 for fingerprint identification according to an embodiment of the present application. The method shown in FIG. 3 may be performed by a touch screen, a processor, or a fingerprint identification apparatus. As shown in FIG. 3, the method includes all or part of the following steps:
in 310, acquiring a pressing region in which a finger performs a fingerprint pressing operation in a fingerprint capturing region of a display screen; and
in 320, determining an illuminating region of the display screen using the pressing region, where light emitted by the display screen in the illuminating region is used for fingerprint identification of the finger which performs the fingerprint pressing, and an area of the illuminating region is smaller than an area of the fingerprint capturing region;
wherein the determining the illuminating region of the display screen using the pressing region comprises:
   performing graphic fitting with the center point of the pressing region as a center and a long axis of the pressing region to obtain a circular region, and determining the circular region as the illuminating region; or
   performing graphic fitting with the center point of the pressing region as a center, a long axis of the pressing region and a short axis of the pressing region to obtain an elliptical region, and determining the elliptical region as the illuminating region.

When fingerprint identification is performed, an illuminating region of a display screen is determined according to a pressing region for a finger on the display screen, so that a light-emitting unit of the display screen located in the illuminating region instead of light-emitting units in the whole fingerprint capturing region is used as a light source for fingerprint identification, thereby reducing power consumption of a display screen. In addition, the light-emitting unit of the display screen in the illuminating region is used as the light source for fingerprint identification, which could reduce light leakage generated during fingerprint capturing and improve beauty of an interface.

In other words, the fingerprint identification apparatus may perform fingerprint identification according to a light signal formed by reflection of the finger illuminated by light in the illuminating region of the display screen. The display screen may only emit light in the illuminating region within the fingerprint identification region and does not emit light in other regions.

It should be understood that in the embodiment of the present application, the display screen emits light in the illuminating region refers to that the display screen emits light in the illuminating region for fingerprint identification, that is, the light emitted in the illuminating region is used for fingerprint identification. The display screen does not emit light in other display regions except the illuminating region, which refers to that the display screen does not emit light in other regions for fingerprint identification, but the display screen may still emit light in other regions for functions such as image output and display. In other words, the light emitted in other regions is used for other functions instead of fingerprint identification. The light emitted in the illuminating region may have different intensities and wavelengths from those of the light emitted in other regions, for example, a light intensity of the light emitted in the illuminating region is significantly higher than that of the light emitted in other regions of the display screen.

The illuminating region is determined according to the pressing region of the finger, and an area of the illuminating region is larger than or equal to an area of the pressing region, and smaller than an area of the fingerprint capturing region. When a finger is pressed against a screen, the screen acquires a pressing region of the finger, the pressing region is used for determining an illuminating region, and the illuminating region is used for determining which light-emitting units of the display screen are used as light sources for fingerprint identification so as to emit light for fingerprint identification to the finger. The light emitted in the illuminating region is reflected by the finger and captured by a fingerprint sensor in the fingerprint identification apparatus, so that fingerprint data may be acquired according to the captured light signal, and fingerprint identification is completed based on the fingerprint data.

In the embodiment of the present application, the light source for the fingerprint identification may include other additional light sources in addition to the light-emitting unit of the display screen in the illuminating region, which is not limited herein.

The screen in the embodiment of the present application may also be referred to as a screen component, which includes a touch screen and a display screen. The touch screen and the display screen may be placed on top of one another, for example, the touch screen is attached above the display screen.

The touch screen includes a plurality of touch points, and the touch screen may determine a pressing operation of the finger according to a signal variation of each of the plurality of touch points, for example, a pressing position, a pressing strength. The touch screen may be, for example, a capacitive touch screen, and when the finger is pressed against the fingerprint capturing region in the screen, the touch screen may determine the pressing region of the finger according to a capacitance variation on each touch point.

The display screen has a light-emitting layer including a plurality of light-emitting units, where part of the light-emitting units may be used as excitation light sources for fingerprint identification. The display screen may be, for example, a self-emitting display screen such as an OLED display screen, and the light-emitting layer of the display screen includes a plurality of organic light-emitting diode light sources, where the organic light-emitting diode light source located in the illuminating region is used as the light source for fingerprint identification.

Taking screens shown in FIGS. 4(a) and 4(b) as an example, FIGS. 4(a) and 4(b) are top views of the screen. The screen includes a touch screen and a display screen, and the display screen is attached under the touch screen. The screen may sense a finger pressing operation and achieve other functions of the touch screen and the display screen. FIG. 4(a) shows a fingerprint capturing region of a fingerprint identification apparatus, where the fingerprint capturing region is located at a lower part of a display region of the screen and occupies most of the lower part, and the fingerprint identification apparatus can acquire fingerprint information in the fingerprint capturing region. FIG. 4(b) shows respective touch points on a screen, where each small grid represents one touch point, when a finger is placed in the fingerprint capturing region, signal values of touch points in contact with the finger vary, and based on the signal variation of these touch points on the screen, the pressing region of the finger may be determined.

Optionally, the fingerprint identification apparatus may include one or more fingerprint sensor chips. When the fingerprint identification apparatus includes a plurality of fingerprint sensor chips, for example, two fingerprint sensor chips, the fingerprint capturing region includes sensing regions of the plurality of fingerprint sensor chips.

An area of the fingerprint capturing region may be equal to a physical area occupied by sensing arrays of all fingerprint sensor chips; alternatively, an area of the fingerprint capturing region may be larger than a physical area occupied by sensing arrays of all fingerprint sensor chips through light path design such as lens imaging light path design, reflective folding light path design or other light path design such as light convergence or reflection.

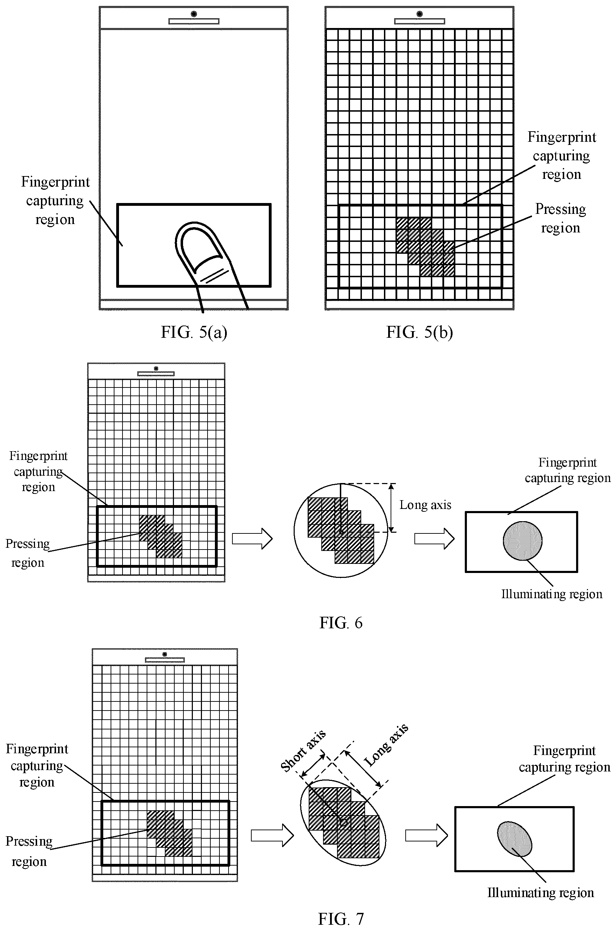

The following describes how to acquire an illuminating region in an embodiment of the present application with reference to FIGS. 5 to 7.

The method shown in FIG. 3 may be performed by a touch screen, a processor such as a main processor of a terminal device, or a fingerprint identification apparatus. In an embodiment of the present application, the touch screen, the processor, the fingerprint identification apparatus, or the like may be used to determine an illuminating region, which is not limited herein.

In other words, the illuminating region may be determined by the touch screen according to a pressing region in which a finger performs a fingerprint pressing operation in a fingerprint capturing region; alternatively, the illuminating region may be determined by the processor according to a pressing region; alternatively, the illuminating region may be determined by the fingerprint identification apparatus according to a pressing region.

Optionally, if the method is performed by a touch screen, in the 310, the acquiring the pressing region in which the finger performs the fingerprint pressing operation in the fingerprint capturing region includes: determining the pressing region according to a signal variation on each touch point when the finger performs the pressing operation.

For example, when a finger performs a pressing operation in a fingerprint identification region, a touch screen determines a pressing region of the finger according to a signal variation on each touch point, uses the pressing region as an illuminating region and reports it to a processor, and the processor controls a display screen to emit light in the illuminating region for fingerprint identification.

Optionally, if the method is performed by a processor, in the 310, the acquiring the pressing region in which the finger performs the fingerprint pressing operation in the fingerprint capturing region includes: acquiring the pressing region reported by a touch screen.

For example, when a finger performs a pressing operation in a fingerprint identification region, the touch screen determines a pressing region of the finger according to a signal variation on each touch point and reports information of the pressing region to a processor. The processor determines an illuminating region according to the information of the pressing region reported by the touch screen, and controls a display screen to emit light in the illuminating region for fingerprint identification.

Optionally, if the method is performed by a fingerprint identification apparatus, in the 310, the acquiring the pressing region in which the finger performs the fingerprint pressing operation in the fingerprint capturing region includes: acquiring the pressing region reported by a touch screen. After the 320, the method may further include: performing fingerprint identification according to a light signal formed by reflection of the finger illuminated by light in the illuminating region of the display screen.

For example, when a finger performs a pressing operation in a fingerprint identification region, the touch screen determines a pressing region of the finger according to a signal variation on each touch point and sends information of the pressing region to the fingerprint identification apparatus. The fingerprint identification apparatus determines an illuminating region according to the information of the pressing region reported by the touch screen, and sends information of the illuminating region to a processor, and the processor controls a display screen to emit light in the illuminating region. Light reflected by the finger is captured by the fingerprint identification apparatus. The fingerprint identification apparatus performs fingerprint identification according to the captured light signal.

Taking FIG. 5(a) as an example, when a finger performs a pressing operation in a fingerprint capturing region, signal values of respective touch points on a touch screen vary, and based on these variations, the touch screen may determine, for example, a pressing region shown by a hatched portion in FIG. 5(b). Graphical fitting is performed on the pressing region to obtain an illuminating region with a specific shape.

Hereinafter, a process of determining an illuminating region will be described in detail.

Graphic fitting is performed based on a center point of the pressing region, a long axis of the pressing region and a short axis of the pressing region to obtain an elliptical illuminating region; or graphic fitting is performed based on a center point of the pressing region and a long axis of the pressing region to obtain a circular illuminating region.

As shown in FIG. 6, after a finger performs a pressing operation in a fingerprint capturing region to obtain information of a corresponding pressing region, graphic fitting is be performed with a center point as a center and a long axis of a pressing region as a radius according to the obtained center point and the long axis of the pressing region, to obtain a circular region. The circular region is the illuminating region.

As shown in FIG. 7, after a finger performs a pressing operation in a fingerprint capturing region to obtain information of a corresponding pressing region, graphic fitting is performed according to the obtained center point of the pressing region, a long axis of the pressing region, and a short axis of the pressing region based on the center point, the long axis, and the short axis, to obtain an elliptical region as shown in FIG. 7. The elliptical region is the illuminating region. It can be seen that when the pressing region is elliptical, the elliptical illuminating region shown in FIG. 7 substantially overlaps with the pressing region, and an area of the illuminating region is substantially equal to an area of the pressing region, thereby minimizing power consumption.

Considering a shape characteristic of a finger, when the finger performs a fingerprint pressing operation in a fingerprint capturing region, a shape of a pressing region of the fingerprint pressing operation is generally approximately elliptical or circular. Therefore, fitting an elliptical or circular illuminating region according to the pressing region is not only easy to realize, but also facilitates forming of an illuminating region with the smallest area that covers the pressing region, thereby further reducing power consumption of a display screen.

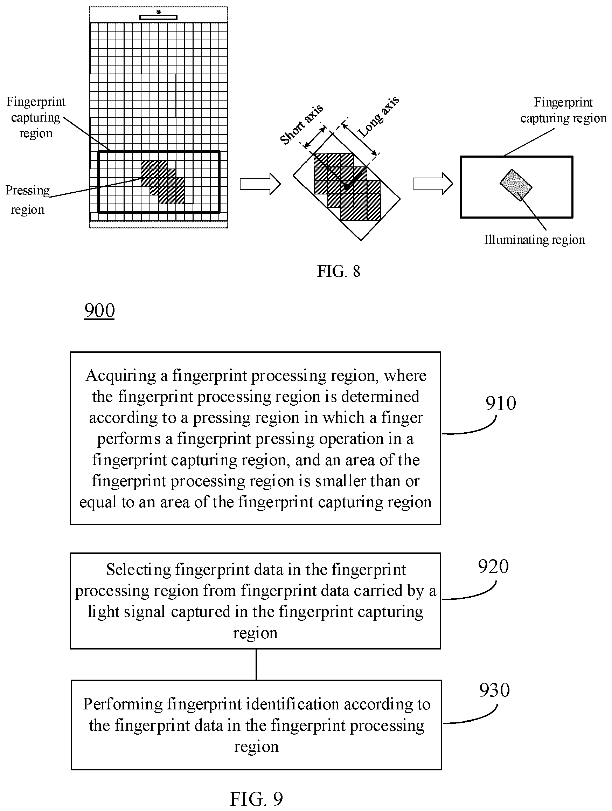

A shape of the illuminating region in the embodiment of the present application, is circular, elliptical as described above. The following example of FIG. 8 is not according to the invention and is present for illustration purpose only, as shown in FIG. 8, an illuminating region obtained by fitting based on information of a pressing region such as a center, a long axis and a short axis of the pressing region may also be a rectangular region.

After a fingerprint sensor acquires a light signal in a fingerprint capturing region, data may be processed according to fingerprint data carried in the light signal. For example, a preprocessing operation such as filtering, convolution, enhancement, and an operation such as image feature extraction may be performed on the fingerprint data. The processed data may be used for fingerprint matching with a fingerprint template in a fingerprint database, and fingerprint identification may be completed according to a matching result. As an area of the fingerprint capturing region increases, there are more captured light signals. If data carried by the light signals captured in the whole fingerprint capturing region is processed, an efficiency of fingerprint identification will be affected.

Therefore, The pressing region is further used for selecting, by a fingerprint identification apparatus, fingerprint data in the pressing region from fingerprint data carried by a light signal captured in the fingerprint capturing region, where the fingerprint data in the pressing region is used for fingerprint identification by the fingerprint identification apparatus.

Alternatively, optionally, the illuminating region is further used for selecting, by a fingerprint identification apparatus, fingerprint data in the illuminating region from fingerprint data carried by a light signal captured in the fingerprint capturing region, where the fingerprint data in the illuminating region is used for fingerprint identification by the fingerprint identification apparatus.

The following describes how a fingerprint identification apparatus performs fingerprint identification according to captured fingerprint data in detail below with reference to FIG. 9.

FIG. 9 shows a method for fingerprint identification according to an embodiment of the present application. The method may be performed by an apparatus for fingerprint identification. As shown in FIG. 9, the method includes all or part of the following steps.

In 910, a fingerprint processing region is acquired.

The fingerprint processing region is determined according to a pressing region in which a finger performs a fingerprint pressing operation in a fingerprint capturing region.

Optionally, an area of the fingerprint processing region is smaller than or equal to an area of the fingerprint capturing region.

Optionally, the fingerprint processing region covers the pressing region.

In 920, fingerprint data in the fingerprint processing region is selected from fingerprint data carried by a light signal captured in the fingerprint capturing region.

In 930, fingerprint identification is performed according to the fingerprint data in the fingerprint processing region.

In this embodiment, the light signal captured in the fingerprint capturing region carries fingerprint data. The fingerprint identification apparatus selects the fingerprint data in the fingerprint processing region from the fingerprint data in the fingerprint capturing region according to the fingerprint processing region, and performs fingerprint identification according to the data in the fingerprint processing region. Since an area of a fingerprint processing region is smaller than an area of a fingerprint capturing region, an amount of the fingerprint data processed by a fingerprint identification apparatus is reduced, a fingerprint identification efficiency is enhanced, and user experience is improved.

Fingerprint data can be captured in the fingerprint capturing region, however not all of the fingerprint data carries sufficient fingerprint information, and the fingerprint information of the finger is concentrated in and around the pressing region of the finger. Therefore, the fingerprint data in the fingerprint processing region is sufficient for fingerprint identification.

A shape of the fingerprint processing region described in this embodiment may be the same as that of the illuminating region in the foregoing embodiment, a circular region or elliptical region covering the fingerprint pressing region. A shape of the fingerprint processing region may also be different from that of the illuminating region in the foregoing embodiment, for example, the illuminating region is circular and the fingerprint processing region is elliptical. In addition, the areas of the illuminating region and the fingerprint processing region may or may not be equal.

Preferably, the fingerprint processing region and the illuminating region are the same region. At this time, after the illuminating region is determined, the fingerprint processing region is also determined.

Optionally, the fingerprint processing region is the pressing region.

After acquiring the pressing region reported by the touch screen, the fingerprint identification apparatus may directly cut the fingerprint data in the fingerprint capturing region based on the pressing region to obtain the fingerprint data in the pressing region and perform fingerprint identification according to the fingerprint data in the pressing region.

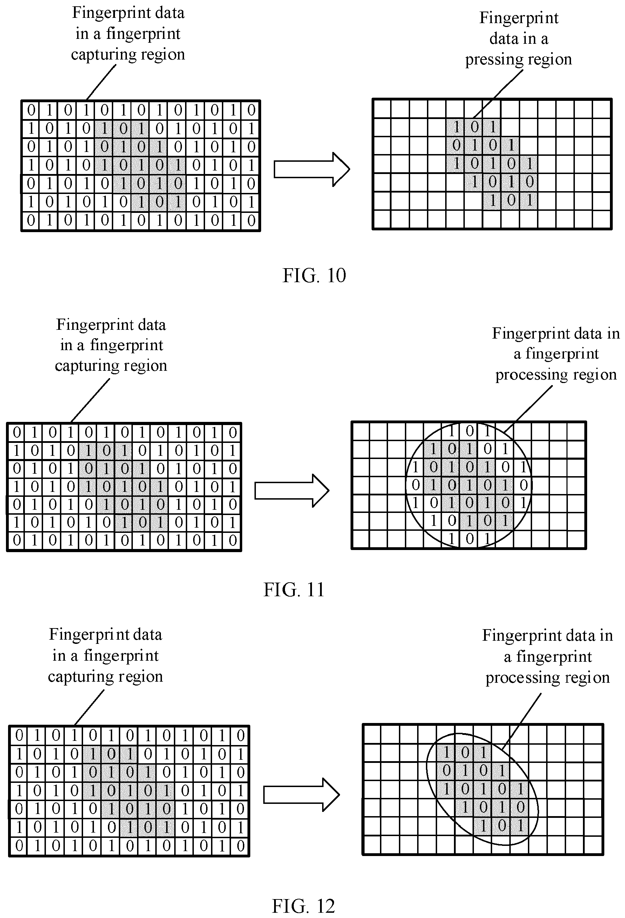

For example, as shown in FIG. 10, when a finger performs a pressing operation in a fingerprint capturing region, a touch screen can acquire a pressing region for the finger. The touch screen may report information of the pressing region to a fingerprint identification apparatus. The fingerprint identification apparatus cuts data carried by a light signal captured in the fingerprint capturing region based on the pressing region, to obtain fingerprint data in the pressing region as shown in FIG. 10. The fingerprint identification apparatus may perform fingerprint identification according to the fingerprint data in the pressing region.

In FIGS. 10 to 12, numbers 1 and 0 only represent that there is data here rather than a specific value of fingerprint data. Since an amount of data in light signals captured by a fingerprint sensor is much larger than that shown in the figures, in order to illustration, only 0 and 1 are used here to represent that there is data at these positions. In practical application, a value of the fingerprint data in the pressing region is usually larger than a value of fingerprint data in a region other than the pressing region, and the value of fingerprint data around the pressing region decreases as a distance from the pressing region increases. The fingerprint data may be, for example, a gray scale value of each pixel in a fingerprint image obtained by imaging the captured light signal.

Graphic fitting is performed based on a center point of the pressing region, a long axis of the pressing region and a short axis of the pressing region to obtain an elliptical fingerprint processing region; or graphic fitting is performed based on a center point of the pressing region and a long axis of the pressing region to obtain a circular fingerprint processing region.

Preferably, the fingerprint processing region obtained by the performing graphic fitting based on the pressing region can cover the pressing region.

As shown in FIG. 11, when a finger performs a pressing operation in a fingerprint capturing region, a touch screen acquires a pressing region for the finger. The touch screen reports information of a pressing region such as a center point of the pressing region and a long axis of the pressing region to a fingerprint identification apparatus. The fingerprint identification apparatus performs graphic fitting with the center point as a center and the long axis as a radius to obtain a circular region. The circular region is the fingerprint processing region. The fingerprint identification apparatus performs fingerprint identification according to the fingerprint data in the circular region.

As shown in FIG. 12, when a finger performs a pressing operation in a fingerprint capturing region, a touch screen acquires a pressing region for the finger. The touch screen reports information of a pressing region such as a center point of the pressing region, a long axis of the pressing region, a short axis of the pressing region, or the like to a fingerprint identification apparatus. The fingerprint identification apparatus performs graphic fitting based on the center point, the long axis and the short axis, to obtain an elliptical region as shown in FIG. 12. The elliptical region is the fingerprint processing region. It can be seen that when the fingerprint pressing region is elliptical, the elliptical fingerprint processing region shown in FIG. 12 substantially overlaps with the pressing region, an area of the fingerprint processing region is substantially equal to an area of the pressing region, and a data processing amount is minimal. The fingerprint identification apparatus performs fingerprint identification according to fingerprint data in the elliptical region.

Considering a shape characteristic of a finger, when the finger performs a fingerprint pressing operation in a fingerprint capturing region, a shape of a pressing region of the fingerprint pressing operation is generally approximately elliptical or circular. Therefore, fitting an elliptical or circular fingerprint processing region according to the pressing region is not only easy to realize, but also facilitates forming of a fingerprint processing region with the smallest area that covers the pressing region, thereby further reducing the processing amount of fingerprint data and enhancing a fingerprint identification efficiency.

A shape of the fingerprint processing region in the embodiment of the present application is circular, elliptical as described above. The following example of FIG. 8 is not according to the invention and is present for illustration purpose only, as shown in FIG. 8, an illuminating region obtained by fitting based on information of a pressing region such as a center, a long axis and a short axis of the pressing region may also be a rectangular region.

In the embodiment of the present application, the method for fingerprint identification shown in FIG. 3 and the method for fingerprint identification shown in FIG. 9 can be implemented simultaneously.

The light signal captured in the fingerprint capturing region of the fingerprint identification apparatus includes a light signal formed by reflection of the finger illuminated by light in the illuminating region of the display screen. The fingerprint identification apparatus may obtain the fingerprint processing region according to the information of the pressing region reported by the touch screen. The fingerprint identification apparatus cuts the fingerprint data carried by the light signal captured in the fingerprint capturing region according to the fingerprint processing region, and performs fingerprint identification according to the obtained fingerprint data in the fingerprint processing region.

For example, the touch screen determines the illuminating region according to the pressing region and reports the illuminating region to the processor. According to the illuminating region reported by the touch screen, the processor controls a light-emitting unit located in the illuminating region in the display screen as a light source for fingerprint identification. Moreover, the touch screen reports the illuminating region to the fingerprint identification apparatus, and the fingerprint identification apparatus uses the illuminating region as its fingerprint processing region so as to perform fingerprint identification according to the fingerprint data in the fingerprint processing region.

For another example, the processor determines the illuminating region according to the pressing region reported by the touch screen, and controls a light-emitting unit located in the illuminating region in the display screen as a light source for fingerprint identification. Moreover, the touch screen reports the pressing region to the fingerprint identification apparatus, and the fingerprint identification apparatus uses the pressing region as its fingerprint processing region so as to perform fingerprint identification according to fingerprint data in the fingerprint processing region.

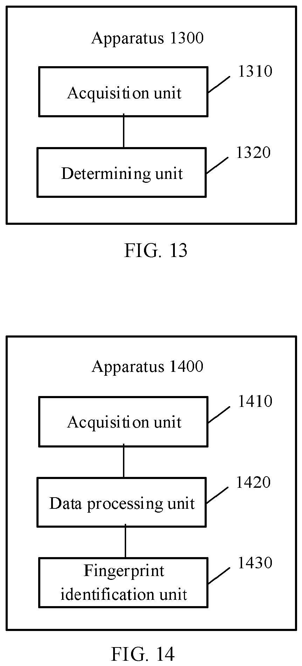

FIG. 13 is a schematic block diagram of an apparatus for fingerprint identification according to an embodiment of the present application. As shown in FIG. 13, an apparatus 1300 includes an acquisition unit 1310 and a determining unit 1320.

An acquisition unit 1310 is configured to acquire a pressing region in which a finger performs a fingerprint pressing operation in a fingerprint capturing region of a display screen.

A determining unit 1320 is configured to determine an illuminating region of the display screen using the pressing region, where light emitted by the display screen in the illuminating region is used for fingerprint identification of the finger which performs the fingerprint pressing, and an area of the illuminating region is smaller than an area of the fingerprint capturing region;
wherein the determine an illuminating region of a display screen using the pressing region comprises:
perform graphic fitting with the center point of the pressing region as a center and a long axis of the pressing region to obtain a circular region, and determine the circular region as the illuminating region; or
perform graphic fitting with the center point of the pressing region as a center, a long axis of the pressing region and a short axis of the pressing region to obtain an elliptical region, and determine the elliptical region as the illuminating region.

Therefore, when fingerprint identification is performed, an illuminating region of a display screen is determined according to a pressing region for a finger on the display screen, so that a light-emitting unit of the display screen located in the illuminating region instead of light-emitting units in the whole fingerprint capturing region is used as a light source for fingerprint identification, thereby reducing power consumption.

The pressing region is further used for selecting, by a fingerprint identification apparatus, fingerprint data in the pressing region from fingerprint data carried by a light signal captured in the fingerprint capturing region, where the fingerprint data in the pressing region is used for fingerprint identification by the fingerprint identification apparatus.

Optionally, the illuminating region is further used for selecting, by a fingerprint identification apparatus, fingerprint data in the illuminating region from fingerprint data carried by a light signal captured in the fingerprint capturing region, where the fingerprint data in the illuminating region is used for fingerprint identification by the fingerprint identification apparatus.

Optionally, the fingerprint capturing region includes sensing regions of at least two fingerprint sensor chips.

Optionally, the apparatus 1300 is a touch screen, and the acquisition unit 1310 is configured to: determine the pressing region according to a signal variation on each touch point when the finger performs the pressing operation.

Optionally, the apparatus 1300 is a processor or a fingerprint identification apparatus, and the acquisition unit 1310 is configured to: acquire the pressing region reported by a touch screen.

FIG. 14 is a schematic block diagram of an apparatus for fingerprint identification according to an embodiment of the present application. As shown in FIG. 14, an apparatus 1400 includes an acquisition unit 1410, a data processing unit 1420, and a fingerprint identification unit 1430.

An acquisition unit 1410 is configured to acquire a fingerprint processing region. The fingerprint processing region is determined according to a pressing region in which a finger performs a fingerprint pressing operation in the fingerprint capturing region, and an area of the fingerprint processing region is not larger than an area of the fingerprint capturing region.

A data processing unit 1420 is configured to select fingerprint data in the fingerprint processing region from fingerprint data carried by a light signal captured in the fingerprint capturing region.

A fingerprint identification unit 1430 is configured to perform fingerprint identification according to the fingerprint data in the fingerprint processing region.

Since an area of a fingerprint processing region is smaller than an area of a fingerprint capturing region, fingerprint data in the fingerprint processing region is selected from fingerprint data in the fingerprint capturing region, and fingerprint identification is performed according to the data in the fingerprint processing region, so that an amount of the fingerprint data processed by a fingerprint identification apparatus is reduced, a fingerprint identification efficiency is enhanced, and user experience is improved.

Optionally, the fingerprint processing region is the pressing region.

The fingerprint processing region is an elliptical region obtained by performing graphic fitting based on a center point of the pressing region, a long axis of the pressing region and a short axis of the pressing region.

The fingerprint processing region is a circular region obtained by performing graphic fitting based on a center point of the pressing region and a long axis of the pressing region.

Optionally, the fingerprint capturing region includes sensing regions of at least two fingerprint sensor chips.

An embodiment of the present application further provides a terminal device, and the terminal device may include the fingerprint identification apparatus in the foregoing various embodiments of the present application.

Optionally, the terminal device further includes an OLED display screen, and a light-emitting layer of the display screen includes a plurality of organic light-emitting diode light sources, where the terminal device employs an organic light-emitting diode light source located in an illuminating region as a light source for fingerprint identification.

Optionally, the terminal device further includes a fingerprint sensor configured to capture a light signal formed by reflection of the finger illuminated by light in the illuminating region of the display screen.

By way of example and not limitation, the terminal device in the embodiment of the present application may be portable or mobile computing devices such as a mobile phone, a tablet computer, a notebook computer, a desktop computer, a gaming device, an in-vehicle electronic device or a wearable smart device, and other electronic devices such as an electronic database, an automobile and an automated teller machine (ATM). The wearable smart device includes a device such as a smart watch or smart glasses, that is of a full function and a large size and that can implement all or some functions without relying on a smartphone, and a device such as a smart wristband or smart jewelry that performs sign monitoring, that only focus on one type of application function and that needs to cooperate with other devices such as a smartphone.

## Claims

1. A method for fingerprint identification, comprising:
acquiring (310) a pressing region in which a finger performs a fingerprint pressing operation in a fingerprint capturing region of a display screen; and
determining (320) an illuminating region of the display screen using the pressing region, wherein light emitted by the display screen in the illuminating region is used for fingerprint identification of the finger which performs the fingerprint pressing, and
the area of the illuminating region is smaller than the area of the fingerprint capturing region;
wherein the determining the illuminating region of the display screen using the pressing region comprises:
performing graphic fitting with the center point of the pressing region as a center and a long axis of the pressing region to obtain a circular region, and determining the circular region as the illuminating region; or
performing graphic fitting with a center point of the pressing region as a center, a long axis of the pressing region and a short axis of the pressing region to obtain an elliptical region, that covers the pressing region,
and determining the elliptical region as the illuminating region;
wherein the pressing region is further used for selecting, by the fingerprint identification apparatus, fingerprint data in the pressing region from fingerprint data carried by a light signal captured in the fingerprint capturing region, wherein the fingerprint data in the pressing region is used for fingerprint identification by the fingerprint identification apparatus.

2. The method according to claim 1, wherein the circular or the elliptical illuminating region is further used for selecting, by a fingerprint identification apparatus, fingerprint data in the circular or the elliptical illuminating region from fingerprint data carried by a light signal captured in the fingerprint capturing region, wherein the fingerprint data in the circular or the elliptical illuminating region is used for fingerprint identification by the fingerprint identification apparatus.

3. The method according to claim 1 or 2, wherein the fingerprint capturing region comprises sensing regions of at least two fingerprint sensor chips.

4. The method according to any one of claims 1 to 3, wherein the method is performed by a touch screen, and the acquiring (310) the pressing region in which the finger performs the fingerprint pressing operation in the fingerprint capturing region comprises:
determining the pressing region according to a signal variation on each touch point when the finger performs the pressing operation.

5. The method according to any one of claims 1 to 4, wherein the method is performed by a processor or a fingerprint identification apparatus, and the acquiring (310) the pressing region in which the finger performs the fingerprint pressing operation in the fingerprint capturing region comprises:
acquiring the pressing region reported by a touch screen.

6. An apparatus for fingerprint identification, comprising:
an acquisition unit (1310) configured to acquire a pressing region in which a finger performs a fingerprint pressing operation in a fingerprint capturing region of a display screen; and
a determining unit (1320) configured to determine an illuminating region of the display screen using the pressing region, wherein light emitted by the display screen in the illuminating region is used for fingerprint identification of the finger which performs the fingerprint pressing, and the area of the illuminating region is smaller than the area of the fingerprint capturing region;
wherein the determine an illuminating region of a display screen using the pressing region comprises:
perform graphic fitting with the center point of the pressing region as a center and a long axis of the pressing region to obtain a circular region, and determine the circular region as the illuminating region; or
perform graphic fitting with the center point of the pressing region as a center, a long axis of the pressing region and a short axis of the pressing region to obtain an elliptical region, that covers the pressing region,
and determine the elliptical region as the illuminating region;
wherein the pressing region is further used for selecting, by the fingerprint identification apparatus, fingerprint data in the pressing region from fingerprint data carried by a light signal captured in the fingerprint capturing region, wherein the fingerprint data in the pressing region is used for fingerprint identification by the fingerprint identification apparatus.

7. The apparatus according to claim 6, wherein the circular or the elliptical illuminating region is further used for selecting, by a fingerprint identification apparatus, fingerprint data in the circular or the elliptical illuminating region from fingerprint data carried by a light signal captured in the fingerprint capturing region, wherein the fingerprint data in the circular or the elliptical illuminating region is used for fingerprint identification by the fingerprint identification apparatus.

8. The apparatus according to claim 6 or 7, wherein the fingerprint capturing region comprises sensing regions of at least two fingerprint sensor chips.

9. The apparatus according to any one of claims 6 to 8, wherein the apparatus is a touch screen, and the acquisition unit (1310) is configured to:
determine the pressing region according to a signal variation on each touch point when the finger performs the pressing operation; or
the apparatus is a processor or a fingerprint identification apparatus, and the acquisition unit (1310) is configured to:
acquire the pressing region reported by a touch screen.

10. A terminal device comprising the apparatus for the fingerprint identification according to any one of claims 6 to 9; and
an organic light-emitting diode, OLED, display screen, and a light-emitting layer of the display screen comprises a plurality of organic light-emitting diode light sources, wherein the terminal device employs an organic light-emitting diode light source located in an illuminating region as an excitation light source for fingerprint identification.

## Patentansprüche

1. Verfahren zur Fingerabdruckerkennung, Folgendes umfassend:
Aufnehmen (310) eines Pressbereichs, in dem ein Finger einen Fingerabdruck-Pressvorgang in einem Fingerabdruck-Erfassungsbereich eines Anzeigebildschirms durchführt; und
Bestimmen (320) eines Beleuchtungsbereichs des Anzeigebildschirms unter Verwendung des Pressbereichs, wobei Licht, das von dem Anzeigebildschirm in dem Beleuchtungsbereich ausgesendet wird, zur Fingerabdruckerkennung des Fingers verwendet wird, der das Abpressen des Fingerabdrucks durchführt, und die Fläche des Beleuchtungsbereichs kleiner ist als die Fläche des Fingerabdruck-Erfassungsbereichs;
wobei das Bestimmen des Beleuchtungsbereichs des Anzeigebildschirms unter Verwendung des Pressbereichs Folgendes umfasst:
Durchführen einer grafischen Passung mit dem Mittelpunkt des Pressbereichs als Mitte und einer langen Achse des Pressbereichs, um einen kreisförmigen Bereich zu erhalten, und Bestimmen des kreisförmigen Bereichs als Beleuchtungsbereich; oder
Durchführen einer grafischen Passung mit einem Mittelpunkt des Pressbereichs als Mitte, einer langen Achse des Pressbereichs und einer kurzen Achse des Pressbereichs, um einen elliptischen Bereich zu erhalten, der den Pressbereich abdeckt, und Bestimmen des elliptischen Bereichs als Beleuchtungsbereich;
wobei der Pressbereich ferner verwendet wird, um, mittels der Einrichtung zur Fingerabdruckerkennung, Fingerabdruckdaten in dem Pressbereich aus Fingerabdruckdaten, die durch ein Lichtsignal übertragen werden, das in dem Fingerabdruck-Erfassungsbereich erfasst wird, auszuwählen, wobei die Fingerabdruckdaten in dem Pressbereich zur Fingerabdruckerkennung mittels der Einrichtung zur Fingerabdruckerkennung verwendet werden.

2. Verfahren nach Anspruch 1, wobei der kreisförmige oder der elliptische Beleuchtungsbereich ferner verwendet wird, um, mittels einer Einrichtung zur Fingerabdruckerkennung, Fingerabdruckdaten in dem kreisförmigen oder dem elliptischen Beleuchtungsbereich aus Fingerabdruckdaten, die durch ein Lichtsignal übertragen werden, das in dem Fingerabdruck-Erfassungsbereich erfasst wird, auszuwählen, wobei die Fingerabdruckdaten in dem kreisförmigen oder dem elliptischen Beleuchtungsbereich zur Fingerabdruckerkennung mittels der Einrichtung zur Fingerabdruckerkennung verwendet werden.

3. Verfahren nach Anspruch 1 oder 2, wobei der Fingerabdruck-Erfassungsbereich Abtastbereiche von mindestens zwei Fingerabdruck-Sensorchips umfasst.

4. Verfahren nach einem der Ansprüche 1 bis 3, wobei das Verfahren mittels eines Touchscreens durchgeführt wird und das Aufnehmen (310) des Pressbereichs, in dem der Finger den Fingerabdruck-Pressvorgang in dem Fingerabdruck-Erfassungsbereich durchführt, Folgendes umfasst:
Bestimmen des Pressbereichs gemäß einer Signalveränderung an jedem Berührungspunkt, wenn der Finger den Pressvorgang durchführt.

5. Verfahren nach einem der Ansprüche 1 bis 4, wobei das Verfahren mittels eines Prozessors oder einer Einrichtung zur Fingerabdruckerkennung durchgeführt wird und das Aufnehmen (310) des Pressbereichs, in dem der Finger den Fingerabdruck-Pressvorgang in dem Fingerabdruck-Erfassungsbereich durchführt, Folgendes umfasst:
Aufnehmen des Pressbereichs, der von einem Touchscreen gemeldet wird.

6. Einrichtung zur Fingerabdruckerkennung, Folgendes umfassend:
eine Aufnahmeeinheit (1310), die ausgestaltet ist, einen Pressbereich aufzunehmen, in dem ein Finger einen Fingerabdruck-Pressvorgang in einem Fingerabdruck-Erfassungsbereich eines Anzeigebildschirms durchführt; und
eine Bestimmungseinheit (1320), die ausgestaltet ist, einen Beleuchtungsbereich des Anzeigebildschirms unter Verwendung des Pressbereichs zu bestimmen, wobei Licht, das von dem Anzeigebildschirm in dem Beleuchtungsbereich ausgesendet wird, zur Fingerabdruckerkennung des Fingers verwendet wird, der das Abpressen des Fingerabdrucks durchführt, und die Fläche des Beleuchtungsbereichs kleiner ist als die Fläche des Fingerabdruck-Erfassungsbereichs;
wobei das Bestimmen eines Beleuchtungsbereichs eines Anzeigebildschirms unter Verwendung des Pressbereichs Folgendes umfasst:
Durchführen einer grafischen Passung mit dem Mittelpunkt des Pressbereichs als Mitte und einer langen Achse des Pressbereichs, um einen kreisförmigen Bereich zu erhalten, und Bestimmen des kreisförmigen Bereichs als Beleuchtungsbereich; oder
Durchführen einer grafischen Passung mit dem Mittelpunkt des Pressbereichs als Mitte, einer langen Achse des Pressbereichs und einer kurzen Achse des Pressbereichs, um einen elliptischen Bereich zu erhalten, der den Pressbereich abdeckt, und Bestimmen des elliptischen Bereichs als Beleuchtungsbereich;
wobei der Pressbereich ferner verwendet wird, um, mittels der Einrichtung zur Fingerabdruckerkennung, Fingerabdruckdaten in dem Pressbereich aus Fingerabdruckdaten, die durch ein Lichtsignal übertragen werden, das in dem Fingerabdruck-Erfassungsbereich erfasst wird, auszuwählen, wobei die Fingerabdruckdaten in dem Pressbereich zur Fingerabdruckerkennung mittels der Einrichtung zur Fingerabdruckerkennung verwendet werden.

7. Einrichtung nach Anspruch 6, wobei der kreisförmige oder der elliptische Beleuchtungsbereich ferner verwendet wird, um, mittels einer Einrichtung zur Fingerabdruckerkennung, Fingerabdruckdaten in dem kreisförmigen oder dem elliptischen Beleuchtungsbereich aus Fingerabdruckdaten, die durch ein Lichtsignal übertragen werden, das in dem Fingerabdruck-Erfassungsbereich erfasst wird, auszuwählen, wobei die Fingerabdruckdaten in dem kreisförmigen oder dem elliptischen Beleuchtungsbereich zur Fingerabdruckerkennung mittels der Einrichtung zur Fingerabdruckerkennung verwendet werden.

8. Einrichtung nach Anspruch 6 oder 7, wobei der Fingerabdruck-Erfassungsbereich Abtastbereiche von mindestens zwei Fingerabdruck-Sensorchips umfasst.

9. Einrichtung nach einem der Ansprüche 6 bis 8, wobei die Einrichtung ein Touchscreen ist und die Aufnahmeeinheit (1310) ausgestaltet ist zum:
Bestimmen des Pressbereichs gemäß einer Signalveränderung an jedem Berührungspunkt, wenn der Finger den Pressvorgang durchführt; oder
die Einrichtung ein Prozessor oder eine Einrichtung zur Fingerabdruckerkennung ist und die Aufnahmeeinheit (1310) ausgestaltet ist zum:
Aufnehmen des Pressbereichs, der von einem Touchscreen gemeldet wird.

10. Endgerätevorrichtung, umfassend die Einrichtung zur Fingerabdruckerkennung nach einem der Ansprüche 6 bis 9; und
einen Anzeigebildschirm mit organischer Leuchtdiode, OLED, und eine Leuchtschicht des Anzeigebildschirms umfasst eine Vielzahl von Lichtquellen mit organischer Leuchtdiode, wobei die Endgerätevorrichtung eine Lichtquelle mit organischer Leuchtdiode einsetzt, die sich in einem Beleuchtungsbereich als Erregerlichtquelle zur Fingerabdruckerkennung befindet.

## Revendications

1. Procédé d'identification d'empreinte digitale, comprenant :
l'acquisition (310) d'une région de pression dans laquelle un doigt réalise une opération de pression d'empreinte digitale dans une région de capture d'empreinte digitale d'un écran d'affichage ; et
la détermination (320) d'une région d'éclairage de l'écran d'affichage en utilisant la région de pression, dans lequel la lumière émise par l'écran d'affichage dans la région d'éclairage est utilisée pour l'identification de l'empreinte digitale du doigt qui réalise la pression d'empreinte digitale, et l'aire de la région d'éclairage est plus petite que l'aire de la région de capture d'empreinte digitale ;
dans lequel la détermination de la région d'éclairage de l'écran d'affichage en utilisant la région de pression comprend :
la réalisation d'un ajustement graphique avec le point central de la région de pression en tant que centre et un grand axe de la région de pression pour obtenir une région circulaire, et la détermination de la région circulaire en tant que région d'éclairage ; ou
la réalisation d'un ajustement graphique avec un point central de la région de pression en tant que centre, un grand axe de la région de pression et un petit axe de la région de pression pour obtenir une région elliptique, qui couvre la région de pression, et la détermination de la région elliptique en tant que région d'éclairage ;
dans lequel la région de pression est en outre utilisée pour sélectionner, par l'appareil d'identification d'empreinte digitale, des données d'empreinte digitale dans la région de pression à partir de données d'empreinte digitale portées par un signal lumineux capturé dans la région de capture d'empreinte digitale, dans lequel les données d'empreinte digitale dans la région de pression sont utilisées pour l'identification d'empreinte digitale par l'appareil d'identification d'empreinte digitale.

2. Procédé selon la revendication 1, dans lequel la région d'éclairage circulaire ou elliptique est en outre utilisée pour sélectionner, par un appareil d'identification d'empreinte digitale, des données d'empreinte digitale dans la région d'éclairage circulaire ou elliptique à partir de données d'empreinte digitale portées par un signal lumineux capturé dans la région de capture d'empreinte digitale, dans lequel les données d'empreinte digitale dans la région d'éclairage circulaire ou elliptique sont utilisées pour l'identification d'empreinte digitale par l'appareil d'identification d'empreinte digitale.

3. Procédé selon la revendication 1 ou 2, dans lequel la région de capture d'empreinte digitale comprend la détection de régions d'au moins deux puces de capteur d'empreinte digitale.

4. Procédé selon l'une quelconque des revendications 1 à 3, dans lequel le procédé est réalisé par un écran tactile, et l'acquisition (310) de la région de pression dans laquelle le doigt réalise l'opération de pression d'empreinte digitale dans la région de capture d'empreinte digitale comprend :
la détermination de la région de pression selon une variation de signal sur chaque point de contact lorsque le doigt réalise l'opération de pression.

5. Procédé selon l'une quelconque des revendications 1 à 4, dans lequel le procédé est réalisé par un processeur ou un appareil d'identification d'empreinte digitale, et l'acquisition (310) de la région de pression dans laquelle le doigt réalise l'opération de pression d'empreinte digitale dans la région de capture d'empreinte digitale comprend :
l'acquisition de la région de pression rapportée par un écran tactile.

6. Appareil d'identification d'empreinte digitale, comprenant :
une unité d'acquisition (1310) configurée pour acquérir une région de pression dans laquelle un doigt réalise une opération de pression d'empreinte digitale dans une région de capture d'empreinte digitale d'un écran d'affichage ; et
une unité de détermination (1320) configurée pour déterminer une région d'éclairage de l'écran d'affichage en utilisant la région de pression, dans lequel la lumière émise par l'écran d'affichage dans la région d'éclairage est utilisée pour l'identification de l'empreinte digitale du doigt qui réalise la pression d'empreinte digitale, et l'aire de la région d'éclairage est plus petite que l'aire de la région de capture d'empreinte digitale ;
dans lequel la détermination d'une région d'éclairage d'un écran d'affichage en utilisant la région de pression comprend :
la réalisation d'un ajustement graphique avec le point central de la région de pression en tant que centre et un grand axe de la région de pression pour obtenir une région circulaire, et déterminer la région circulaire en tant que région d'éclairage ; ou
la réalisation d'un ajustement graphique avec le point central de la région de pression en tant que centre, un grand axe de la région de pression et un petit axe de la région de pression pour obtenir une région elliptique, qui couvre la région de pression, et déterminer la région elliptique en tant que région d'éclairage ;
dans lequel la région de pression est en outre utilisée pour sélectionner, par l'appareil d'identification d'empreinte digitale, des données d'empreinte digitale dans la région de pression à partir de données d'empreinte digitale portées par un signal lumineux capturé dans la région de capture d'empreinte digitale, dans lequel les données d'empreinte digitale dans la région de pression sont utilisées pour l'identification d'empreinte digitale par l'appareil d'identification d'empreinte digitale.

7. Appareil selon la revendication 6, dans lequel la région d'éclairage circulaire ou elliptique est en outre utilisée pour sélectionner, par un appareil d'identification d'empreinte digitale, des données d'empreinte digitale dans la région d'éclairage circulaire ou elliptique à partir de données d'empreinte digitale portées par un signal lumineux capturé dans la région de capture d'empreinte digitale, dans lequel les données d'empreinte digitale dans la région d'éclairage circulaire ou elliptique sont utilisées pour l'identification d'empreinte digitale par l'appareil d'identification d'empreinte digitale.

8. Appareil selon la revendication 6 ou 7, dans lequel la région de capture d'empreinte digitale comprend la détection de régions d'au moins deux puces de capteur d'empreinte digitale.

9. Appareil selon l'une quelconque des revendications 6 à 8, dans lequel l'appareil est un écran tactile, et l'unité d'acquisition (1310) est configurée pour :
déterminer la région de pression selon une variation de signal sur chaque point de contact lorsque le doigt réalise l'opération de pression ; ou
l'appareil est un processeur ou un appareil d'identification d'empreinte digitale, et l'unité d'acquisition (1310) est configurée pour :
acquérir la région de pression rapportée par un écran tactile.

10. Dispositif terminal comprenant l'appareil d'identification d'empreinte digitale selon l'une quelconque des revendications 6 à 9 ; et
un écran d'affichage à diodes électroluminescentes organiques, OLED, et une couche électroluminescente de l'écran d'affichage comprend une pluralité de sources de lumière à diodes électroluminescentes organiques, dans lequel le dispositif terminal emploie une source de lumière à diodes électroluminescentes organiques située dans une région d'éclairage en tant que source de lumière d'excitation pour l'identification d'empreinte digitale.
